# EUROPEAN PATENT SPECIFICATION

(11) **EP 4 011 657 B1**
(45) Date of publication and mention of the grant of the patent: **31.07.2024**
(21) Application number: 20863339.6
(22) Date of filing: 21.08.2020
(51) Int. Cl.: B60G 13/14, F04B 11/00, B60K 25/10, B60G 21/06

(54) **VEHICLE COMPRISING A SHOCK ABSORPTION SYSTEM WITH ELECTRICAL ENERGY GENERATION**
FAHRZEUG UMFASSEND EIN STOSSDÄMPFUNGSSYSTEM MIT ELEKTRISCHER ENERGIEERZEUGUNG
VÉHICULE COMPRENANT UN SYSTÈME D'AMORTISSEMENT À GÉNÉRATION D'ÉNERGIE ÉLECTRIQUE

(30) Priority: 10.09.2019 ES 201931472 U
(43) Date of publication of application: 15.06.2022
(73) Proprietor: Garcia López, Antonio, 04116 Las Negras (ES)
(72) Inventor: Garcia López, Antonio, 04116 Las Negras (ES)
(74) Representative: Espiell Gomez, Ignacio
(86) International application number: PCT/ES2020/070519
(87) International publication number: WO 2021/048454

(56) References cited:
- WO-A1-2009/129363
- WO-A1-2017/210492
- WO-A2-97/26145
- DE-A1- 102009 056 874
- DE-A1- 19 531 790
- ES-A1- 2 670 435
- ES-U- 1 224 094
- FR-A1- 2 254 453
- JP-A- 2011 025 901
- US-A- 5 337 560

## Description

### OBJECT OF THE INVENTION

The invention refers to a vehicle comprising a shock absorption system with electrical energy generation that contributes, to the function to which it is designed, with advantages and characteristics that will be disclosed in detail thereafter and that mean an improvement to the current state-of-art.

The object of this invention refers to a vehicle comprising an improved shock absorption system as defined in claim 1.

### FIELD OF APPLICATION OF THE INVENTION

The field of application of this invention is within the sector of the industry engaged in manufacturing systems, apparatuses and accessory devices for automotive, focusing in particular in the scope of the shock absorption systems.

### BACKGROUND OF THE INVENTION

As it is known, shock absorption in vehicles is based on the use of shock absorbers that, generally, are independent to each other, so that it is not possible to manage them jointly, which obviously means a lack of effectiveness in the shock absorption system itself, in addition that the pressures and vacuums that occur during their operation are not exploited; being an energy that it would be desirable to exploit.

On the other hand, there exists manufacturers of vehicles with hydroactive suspensions, that allow to regulate the pressure of each shock absorber through an electronic switchboard to which they are connected. However, in this type of shock absorber systems, although they are all controlled by the same switchboard, they still operate in an independent manner and the energy that is generated in the shock absorption process is still not exploited.

To overcome the said problems, a regenerative shock absorption system is known that, disclosed in the utility model with publication nº ES1224094U, in the name of the own applicant of this invention, consist of a system that relate all the vehicle shock absorbers through a single fluid circuit that flows in a single direction, allowing to compensate the shock absorption efforts that occur and that, in addition, passing through a turbine, operates an alternator/generator with which electrical energy is generated that could be exploited in the vehicle itself.

The said system, however, although satisfactorily meeting the objectives sought, possesses some features that could be improved, concretely those referring to the regulation of the flow movement, because this later occurs in the form of pulsations, the objective of this invention being the development of a shock absorption system improved in that sense, so that it comprises a means to optimize its operation by means of the flow movement regulation, and it shall be pointed out that, at least the applicant is not aware of the existence of any other shock absorption system nor any other similar invention , showing technical, structural and constitutive characteristics equal or similar to those the one herein claimed shows.

While document JP 2011 025901 A discloses a vehicle according to the preamble of claim 1, documents DE 10 2009 056874 A1 and DE 195 31 790 A1 disclose further prior art vehicles with similar shock absorption systems.

### EXPLANATION OF THE INVENTION

Z P The vehicle comprising the shock absorption system with electrical energy generation the invention proposes is configured as the ideal solution to the above-mentioned objective, the characterizing details making it possible and distinguishing it conveniently appearing in the final claims attached to this description.

Concretely, what the invention proposes, as it was said before, is a vehicle comprising a shock absorption system according to claim 1.

Thus, in the shock absorption system of the vehicle of the invention, the operation is as follows:
- The valves of the shock absorbers only work in one direction;
- The movement of the shock absorber always generates movement in the fluid, as well when it goes upwards as downwards, creating a pressure in the circuit in the branch thereof connected to the outlet and suction valves in the branch connected to the inlet valves.
- A movement of the fluid is generated in the form of pulses. This fluid arrives to the flow regulator and pulsations shock absorber from which it goes, now in a continuous way, to the turbine that operates the generator/alternator, which can occur either directly or through a system extending or reducing the speed or force transmitted to the said turbine.
- Thereafter, the fluid passes from the turbine of the generator to the reserve tank and from that point to the shock absorbers.
- The shock absorbers can be of any type of those currently in the market or new ones that can appear, provided that they use fluid even though combined with gas.
- All the system can be placed at any accessible place of the vehicle.

Last, it has to be pointed out, as above mentioned, that the reserve tank shall have sizes adapted to be able to contain such an amount of fluid that it covers the amount of fluid that is accumulated in the flow regulator and pulsation shock absorber.

And, on its part, the said flow regulator and pulsation shock absorber regulates the flow pressure and flow rate and dampens the flow arriving from the shock absorbers in the form of discontinuous pulses, with different pressure and volume depending on the work to which the shock absorbers are submitted.

### DESCRIPTION OF THE DRAWINGS

To complement the description carried out and in order to assist to best understand the characteristics of the invention, attached to this specification, as an integral part thereof, a set of drawings in which, for illustration and no limitation purpose, the following has been represented:
Figure 1 it shows a schematic view in perspective of an example of the shock absorption system object of the invention, the main parts and elements can be seen it comprises as well as the arrangement thereof;
figures 2-A and 2-B show sectional schematic elevation views of one of the shock absorbers that the system of the vehicle comprises, according to the invention, represented in their respective stages of vacuum and fluid pressure of their two chambers, the configuration and parts thereof can be seen, namely the one-way inlet and outlet valves each chamber possesses;
figure 3 an enlarged schematic view of a part of the system, of the vehicle, according to the invention appearing in figure 1, that includes the pulsations regulator/shock absorber and the reserve tank, its configuration and its respective arrangement being seen with more detail in the circuit before and after the turbine that operates the generator; and
figure 4 shows a schematic view in perspective of the system of the vehicle of the invention incorporated in a motor vehicle.

### PREFERRED EMBODIMENT OF THE INVENTION

Seen the mentioned figures and according to the numerals adopted in them, a non-limiting example of embodiment can be seen in them of the shock absorption system with electrical energy generation for vehicles of the invention, which comprises what is described in detail below.

Thus, as it is seen in the said figures, the system of the invention, applicable in vehicles (2) that comprise two or more shock absorbers (1), is a system of the type in which each of the said shock absorbers (1) includes two one-way inlet valves (3) of access to the two chambers (1') and (1") that are defined on both sides of the plunger (10) of the said shock ab-sorber , and two one-way outlet valves (4) of the said chambers (1') and (1"), all the shock absorbers (1) being connected to each other in parallel through a fluid circuit (5, 6) with which the said valves (3,4) communicate and in which, in addition, the interposition of a turbine (7) is contemplated, associated to a generator/alternator (8), so that the inlet valves (3) of each shock absorber (1) are connected to a first branch (5) of the circuit coming from the turbine (7), which has been represented by means of a continuous stroke line in the figures, while the outlet valves (4) of the said shock absorbers (1) are connected to a second branch (6) in this case represented by a dashed line that, in turn, connects to the inlet of the turbine (7) of the generator/alternator (8).

This way, the movement of any shock absorber (1) always generates movement in fluid of the circuit, as well when the plunger (10) is going up as when it is going down , in a same direction, creating suction in the first branch (5) thereof connected with the inlet valves (3) and pressure in the second branch (6) connected to the outlet valves (4), establishing with it a circulation of the flow that is continuously passing by the turbine (7) of the generator (8), which allows to generate electrical energy that can be exploited if it is connected to any electrical installation of the vehicle (2) and/or to one or more batteries (9) for their recharging.

From this already known configuration, the system of the vehicle of this invention is distinguished because it comprises in addition, incorporated in the circuit, in the second branch (6) prior to its connection with the turbine (7) of the generator/alternator (8), a regulator/shock absorbing device (11), that regulates the flow pressure and flowrate and dampens its movement in the form of pulsations providing a regulated and constant passing of the flow that optimizes the operation of the generator/alternator (8) and increases its performance.

Likewise, the system of the vehicle of the invention possesses also a reserve tank (12), in this case located ir the first branch (5) of the circuit at the outlet of the turbine (7) that operates the generator/alternator (8), that possesses sizes adapted to being able to contain an amount of fluid equal to the amount of fluid that is accumulated in the pulsations regulator/shock absorbing device (11), to cover the amount of fluid that is accumulated in the said pulsations regulator/shock absorbing device (11) optimizing the performances of the system.

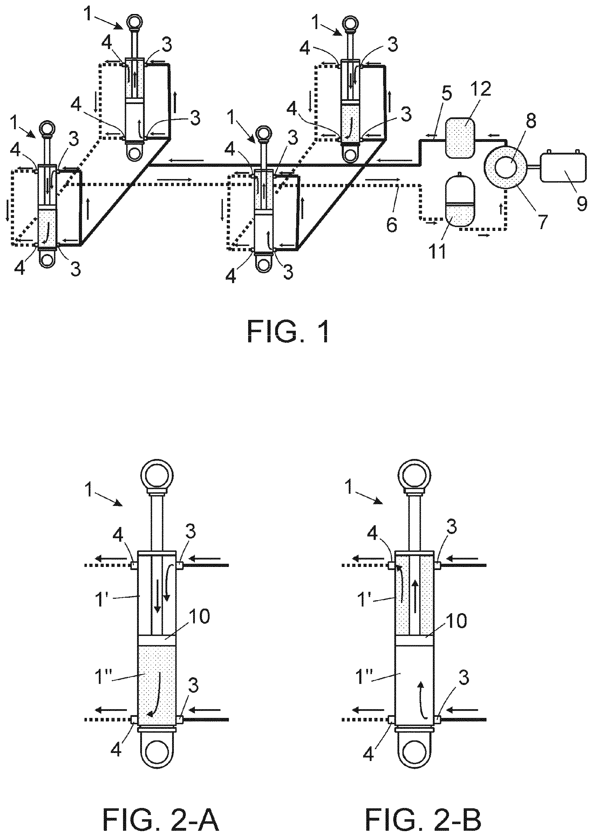

In the outline of the figure 1, an example of the shock absorption system of the vehicle of the invention has beer represented, where the direction followed by the flow along the whole circuit can be seen and in the figures 2-A and 2B, the direction that it follows within the shock absorbers (1) in the two operating stages.

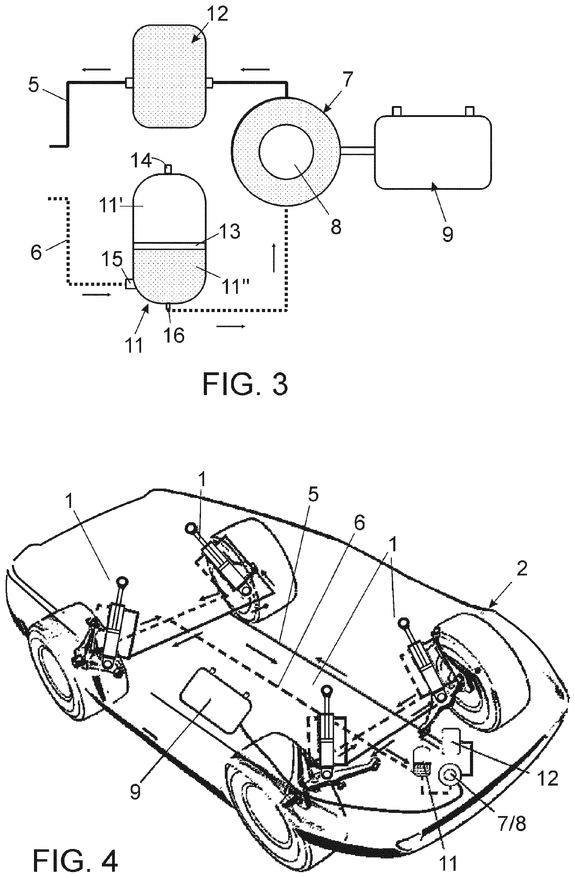

According to the invention, the pulsations (11) regulator/shock absorbing device (11), as it can be seen in the outline of the figure 3, is composed by a container having two independent compartments (11', 11"), separated by a membrane (13) or plunger, in the first of the said compartments (11') gas at a given pressure being present, the pressure that is required to be used to move the turbine (7) that activates the generator/alternator (8), introduced through a filling valve (14) provided to that effect, so that it displaces the membrane (13) or plunger to exert the pressure necessary in the fluid of the circuit that passes from the second of the compartments (11") through respective inlet (15) and outlet (16) connectors provided there, equalizing the pressure and stabilizing the flowrate that is directed to the turbine (7).

## Claims

1. Vehicle comprising a shock absorption system with electrical energy generation, the shock absorption system comprising two or more shock absorbers (1) each including two one-way inlet valves (3) accessing two chambers (1', 1") defined on both sides of a plunger (10) of said shock absorber (1), and two one-way outlet valves (4) of the said chambers (1', 1"), all the shock absorbers (1) being connected to each other in parallel through a fluid circuit (5, 6) with which the said valves (3,4) communicate, the shock absorption system further comprising a turbine (7) provided in said fluid circuit (5, 6) and connected to a generator/alternator (8), wherein the inlet valves (3) of each shock absorber (1) are connected to a first branch (5) of the circuit connected to an outlet of the turbine (7), while the outlet valves (4) of the said shock absorbers (1) are connected to a second branch (6) of the circuit connected to an inlet of the turbine (7), where the generator/alternator (8) is suitable to be connected to any electrical installation of the vehicle (2) and/or to one or more batteries (9) to be recharged,
the shock absorption system further comprising, incorporated in the circuit (5, 6), a pulsations regulating shock absorbing device (11) that regulates the pressure and flow rate and dampers its movement in form of pulsations, providing a regulated and constant flow; and a reserve tank (12) dimensioned to contain an amount of fluid equal to the amount of fluid that is accumulated in the pulsations (11) regulator-shock absorber, to cover the amount of fluid that is accumulated in the said mentioned pulsations regulating shock absorbing device (11), the reserve tank (12) being provided in the first branch (5) of the circuit at the outlet of the turbine (7),
wherein the pulsations regulator/shock absorbing device (11) comprises a container having two independent compartments (11', 11") separated by a membrane (13) or plunger, a first of said compartments (11') having gas at a given pressure required to move the turbine (7) that drives the generator/alternator (8), said gas being introduced through a filling valve (14) of said container, the gas displacing the membrane (13) or plunger to exert said given pressure to the fluid passing through a second of said compartments (11") entering through an inlet (15) connector and exiting through an outlet (16) connector, thereby equalizing the pressure and stabilizing the flow rate towards the turbine (7).
**characterized in that**
the shock absorption system only has one single pulsations regulating shock absorbing device (11) provided in the second branch (6) of the circuit before the inlet to the turbine (7).

## Patentansprüche

1. Fahrzeug umfassend ein Stoßdämpfungssystem mit elektrischer Energieerzeugung, wobei das Stoßdämpfungssystem zwei oder mehr Stoßdämpfer (1) umfasst, von denen jeder zwei Einweg-Einlassventile (3), die auf zwei Kammern (1', 1") zugreifen, die auf beiden Seiten eines Plungers (10) des Stoßdämpfers (1) definiert sind, und zwei Einweg-Auslassventile (4) der Kammern (1', 1") beinhaltet, wobei alle Stoßdämpfer (1) parallel zueinander über einen Fluidkreislauf (5, 6) verbunden sind, mit dem die Ventile (3, 4) in Verbindung stehen, wobei das Stoßdämpfungssystem ferner eine Turbine (7) umfasst, die in dem Fluidkreislauf (5, 6) vorgesehen und mit einem Generator/Alternator (8) verbunden ist, wobei die Einlassventile (3) jedes Stoßdämpfers (1) mit einem ersten Zweig (5) des Kreislaufs verbunden sind, der mit einem Auslass der Turbine (7) verbunden ist, während die Auslassventile (4) der Stoßdämpfer (1) mit einem zweiten Zweig (6) des Kreislaufs verbunden sind, der mit einem Einlass der Turbine (7) verbunden ist, wobei der Generator/Alternator (8) geeignet ist, um an eine beliebige elektrische Anlage des Fahrzeugs (2) und/oder an eine oder mehrere aufzuladende Batterien (9) angeschlossen zu werden,
wobei das Stoßdämpfungssystem ferner eine in den Kreislauf (5, 6) aufgenommene pulsationsregulierende Stoßdämpfungsvorrichtung (11) umfasst, die den Druck und die Durchflussrate reguliert und ihre Bewegung in Form von Pulsationen dämpft, wodurch ein regulierter und konstanter Durchfluss bereitgestellt wird; und einen Reservetank (12), der bemessen ist, um eine Fluidmenge zu enthalten, die gleich der Fluidmenge ist, die sich in dem Pulsationsregler-Stoßdämpfer (11) angesammelt hat, um die Fluidmenge zu decken, die sich in der pulsationsregulierenden Stoßdämpfungsvorrichtung (11) angesammelt hat, wobei der Reservetank (12) in dem ersten Zweig (5) des Kreislaufs an dem Ausgang der Turbine (7) bereitgestellt ist,
wobei die Pulsationsregler-/ Stoßdämpfungsvorrichtung (11) einen Behälter umfasst, der zwei unabhängige Fächer (11', 11") aufweist, die durch eine Membran (13) oder einen Plunger getrennt sind, wobei ein erstes der Fächer (11') Gas mit einem gegebenen Druck enthält, der erforderlich ist, um die Turbine (7) zu bewegen, die den Generator/Alternator (8) antreibt, wobei das Gas durch ein Füllventil (14) des Behälters eingeleitet wird, wobei das Gas die Membran (13) oder den Plunger verdrängt, um den gegebenen Druck auf das Fluid auszuüben, das durch ein zweites der Fächer (11") strömt, das durch einen Einlassanschluss (15) eintritt und durch einen Auslassanschluss (16) austritt, wodurch der Druck ausgeglichen und die Durchflussrate zu der Turbine (7) stabilisiert wird,
**dadurch gekennzeichnet, dass**
das Stoßdämpfungssystem nur eine einzige pulsationsregulierende Stoßdämpfungsvorrichtung (11) aufweist, die in dem zweiten Zweig (6) des Kreislaufs vor dem Einlass in die Turbine (7) bereitgestellt ist.

## Revendications

1. Véhicule comprenant un système d'amortissement à génération d'énergie électrique, le système d'amortissement comprenant deux ou plusieurs amortisseurs (1) comportant chacun deux soupapes d'admission unidirectionnelles (3) accédant à deux chambres (1', 1") définies de part et d'autre d'un piston (10) dudit amortisseur (1), et de deux soupapes de sortie unidirectionnelles (4) desdites chambres (1', 1"), tous les amortisseurs (1) étant reliés entre eux en parallèle par un circuit de fluide (5, 6) avec lequel communiquent lesdites soupapes (3, 4), le système d'amortissement comprenant en outre une turbine (7) disposée dans ledit circuit de fluide (5, 6) et reliée à un générateur/alternateur (8), dans lequel les soupapes d'admission (3) de chaque amortisseur (1) sont reliées à une première branche (5) du circuit reliée à une sortie de la turbine (7), tandis que les soupapes de sortie (4) desdits amortisseurs (1) sont reliées à une seconde branche (6) du circuit reliée à une entrée de la turbine (7), où le générateur/alternateur (8) est apte à être connecté à toute installation électrique du véhicule (2) et/ou à une ou plusieurs batteries (9) à recharger,
le système d'amortissement comprenant en outre, incorporé au circuit (5, 6), un dispositif amortisseur de régulation de pulsations (11) qui régule la pression et le débit et atténue son mouvement sous forme de pulsations, fournissant un écoulement régulé et constant ; et une cuve de réserve (12) dimensionnée pour contenir une quantité de fluide égale à la quantité de fluide qui est accumulée dans le régulateur-amortisseur de pulsations (11), pour couvrir la quantité de fluide qui est accumulée dans ledit dispositif amortisseur de régulation de pulsations mentionné (11), la cuve de réserve (12) étant disposée dans la première branche (5) du circuit au niveau de la sortie de la turbine (7),
dans lequel le dispositif régulateur de pulsations/amortisseur (11) comprend un récipient ayant deux compartiments indépendants (11', 11") séparés par une membrane (13) ou un piston, un premier desdits compartiments (11') ayant du gaz à une pression donnée nécessaire pour déplacer la turbine (7) qui entraîne le générateur/alternateur (8), ledit gaz étant introduit par une soupape de remplissage (14) dudit récipient, le gaz déplaçant la membrane (13) ou le piston pour exercer ladite pression donnée au fluide passant par un second desdits compartiments (11") entrant par un raccord d'admission (15) et sortant par un raccord de sortie (16), égalisant de ce fait la pression et stabilisant le débit vers la turbine (7),
**caractérisé en ce que**
le système amortisseur n'a qu'un seul dispositif amortisseur de régulation de pulsations (11) disposé dans la seconde branche (6) du circuit avant l'admission de la turbine (7).
